# DEMANDE DE BREVET EUROPEEN

(11) **EP 2 372 945 A1**
(43) Date de publication de la demande: **05.10.2011**
(21) Numéro de dépôt: 11157389.5
(22) Date de dépôt: 08.03.2011
(51) Int. Cl.: H04L 9/08

(54) **Procédé de transmission sécurisée de données entre un terminal numérique et une plateforme de services interactifs**

(30) Priorité: 31.03.2010 FR 1052436
(71) Demandeur: FRANCE TELECOM, 75015 Paris (FR)
(72) Inventeur: Cheyrouze, Gilles, 35220, CHATEAUBOURG (FR); Perrufel, Micheline, 35740, PACE (FR)
(74) Mandataire: Cabinet Plasseraud

(57) **Abrégé**

L'invention concerne un procédé de chiffrement d'une donnée dans lequel la donnée est chiffrée (133) dans un terminal numérique (STB) au moyen d'une clé de chiffrement (k) avant d'être transmise (140) à une plateforme de services (SP), la clé de chiffrement étant obtenue au moins partiellement à partir d'une donnée d'utilisation (dᵤ) mémorisée dans le terminal numérique (STB). L'invention concerne également le procédé correspondant de déchiffrement d'une donnée chiffrée (d') reçue d'un terminal numérique (STB) dans lequel la donnée chiffrée est déchiffrée (150) dans une plateforme de services (SP) au moyen d'une clé de chiffrement (k), la clé de chiffrement étant obtenue (151) au moins partiellement à partir d'une donnée d'utilisation (dᵤ) récupérée (153) dans la plateforme de services au moyen d'un identifiant de clé (id) reçu (140) du terminal numérique. L'invention concerne en outre un procédé de transmission sécurisée mettant en oeuvre ces procédés de chiffrement et déchiffrement, un terminal numérique apte à mettre ce procédé de chiffrement, une plateforme de services apte à mettre en oeuvre ce procédé de déchiffrement ainsi qu'un système de transmission sécurisée correspondant.

## Description

L'invention concerne le domaine de la transmission sécurisée de données entre terminaux numériques et plateformes de services interactifs, en particulier dans le domaine de la télévision numérique.

L'essor de la transmission de données numériques s'est accompagné du développement de services interactifs utilisant les possibilités offertes par ce type de transmission.

Ce développement est particulièrement notable dans le domaine de la télévision numérique où les services interactifs se multiplient sur certaines chaines de télévision numériques. Pour implémenter ce type de services interactifs, un système de télévision numérique comporte habituellement une plateforme de services interactifs, appartenant à un fournisseur de services, connectée à un certain nombre de terminaux numériques (STB pour Set Top Box en anglais) situés chez des utilisateurs.

Ces terminaux numériques sont aptes, d'une part, à recevoir le programme télévisé numérique et des services interactifs associés depuis la plateforme de services et, d'autre part, à transmettre à cette plateforme des données fournies par les utilisateurs, ce qui permet de conférer un certain caractère interactif aux services fournis.

Actuellement les données sensibles fournies par un utilisateur sur un terminal numérique, comme des informations personnelles ou un numéro de carte bancaire, ne sont pas toujours chiffrées et peuvent être transmises en clair sur le réseau connectant les terminaux numériques et les plateformes de services interactifs, qu'il soit de type réseau privé, réseau internet, RTC, ou fibre optique, ce qui crée un problème de sécurité.

Lorsque les données transitent sur le réseau internet, il est possible de remédier à ce problème en utilisant le chiffrement offert par le protocole « https ». Cependant, dans la mesure où ce protocole « https » n'est pas systématiquement implémenté dans la plupart des systèmes déjà existants, cette solution est limitée aux systèmes installés récemment utilisant le réseau internet et ne permet pas de résoudre les problèmes de sécurité touchant un grand nombre de terminaux numériques déjà installés dans des systèmes n'utilisant pas ce protocole « https », notamment dans des systèmes utilisant des réseaux privés.

La présente invention vient améliorer la situation.

Elle a pour objet, entre autres, de proposer une solution sécurisée de chiffrement pour des terminaux numériques déjà installés qui ne posséderaient pas cette fonctionnalité, ainsi que pour des terminaux numériques devant être connectés à des réseaux privés n'offrant pas cette fonctionnalité.

Elle propose à cet effet un procédé de chiffrement d'une donnée dans lequel la donnée est chiffrée dans un terminal numérique au moyen d'une clé de chiffrement avant d'être transmise à une plateforme de services, la clé de chiffrement étant obtenue au moins partiellement à partir d'une donnée d'utilisation mémorisée dans le terminal numérique, ce qui permet d'éviter un stockage permanent de clé de chiffrement dans le terminal numérique et donc renforce la sécurisation du procédé de chiffrement. Cette méthode permet en outre d'éviter que la clé de chiffrement ne transite via un réseau: à aucun moment il n'est en effet nécessaire de transmettre cette clé de chiffrement à partir de la plateforme, puisqu'une donnée d'utilisation déjà mémorisée dans le terminal numérique est exploitée pour générer une clef de chiffrement.

Avantageusement, la clé de chiffrement comprend une première partie obtenue par application d'une fonction d'extraction à la donnée d'utilisation, ce qui limite le risque de voir un utilisateur malveillant ayant accès à la plateforme de services découvrir la clé de chiffrement.

Dans un mode de réalisation avantageux, la clé de chiffrement comprend en outre une deuxième partie aléatoire reçue de la plateforme de services suite à l'envoi par le terminal numérique d'une requête en transaction sécurisée. L'unicité de la partie aléatoire ainsi générée permet d'éviter que la connaissance de cette partie aléatoire puisse être employée au cours d'une transaction ultérieure.

Plus particulièrement, la clé de chiffrement comprend la concaténation de la première partie extraite de la donnée d'utilisation mémorisée dans le terminal numérique avec la deuxième partie aléatoire reçue de la plateforme de services.

Dans un mode de réalisation, la donnée chiffrée est transmise à la plateforme de services avec un identifiant de clé obtenu au moins partiellement à partir d'une autre donnée d'utilisation mémorisée dans le terminal numérique. Ceci permet d'éviter que la clé de chiffrement ne transite via un réseau: à aucun moment il n'est en effet nécessaire de transmettre cette clé de chiffrement à partir de la plateforme, puisque seul un identifiant de clef de chiffrement est transmis, qui à lui seul ne permet pas de restituer la clef de chiffrement, sauf à avoir accès à la mémoire du terminal ou de la plateforme de service.

La présente invention propose également un procédé de déchiffrement d'une donnée chiffrée reçue d'un terminal numérique dans lequel la donnée chiffrée est déchiffrée dans une plateforme de services au moyen d'une clé de chiffrement, cette clé de chiffrement étant obtenue au moins partiellement à partir d'une donnée d'utilisation récupérée dans la plateforme de services au moyen d'un identifiant de clé reçu du terminal numérique, ce qui permet d'éviter un stockage permanent de clé de chiffrement dans la plateforme de services et donc renforce la sécurisation du procédé de déchiffrement. Ceci permet en outre d'éviter que la clé de chiffrement ne transite via un réseau: à aucun moment il n'est en effet nécessaire de transmettre cette clé de chiffrement, mémorisée dans le terminal, puisque cette donnée d'utilisation est susceptible d'être obtenue par la plateforme de service elle-même à partir de l'identifiant de clef transmis et de données d'utilisation mémorisées par la plateforme elle-même.

Avantageusement, la clé de chiffrement comprend une première partie obtenue par application d'une fonction d'extraction à la donnée d'utilisation, ce qui limite le risque de voir un utilisateur malveillant ayant accès à la plateforme de services découvrir la clé de chiffrement.

Dans un mode de réalisation avantageux, la clé de chiffrement comprend en outre une deuxième partie aléatoire générée aléatoirement dans la plateforme de services, suite à la réception d'une requête en transaction sécurisée, avant d'être transmise au terminal numérique. L'unicité de la partie aléatoire ainsi générée permet d'éviter que la connaissance de cette partie aléatoire puisse être employée au cours d'une transaction ultérieure.

Plus particulièrement, la clé de chiffrement comprend la concaténation de la première partie extraite de la donnée d'utilisation récupérée au moyen de l'identifiant de clé avec la deuxième partie aléatoire.

Dans un mode de réalisation où la plateforme de services comprend un serveur de clés et un serveur de services interactifs connecté au terminal numérique, la deuxième partie aléatoire est générée dans le serveur de services interactifs et la donnée d'utilisation est mémorisée en association avec l'identifiant de clé dans le serveur de clés. La donnée d'utilisation servant à retrouver la clé de chiffrement n'étant pas stockée dans le serveur directement au contact du réseau de connexion au terminal numérique, la sécurité du chiffrement est renforcée.

Avantageusement, l'étape d'obtention ci-avant comprend l'obtention, dans le serveur de clés, de la donnée d'utilisation associée à l'identifiant de clé reçu du terminal numérique, suivie de l'application de la fonction d'extraction à la donnée d'utilisation récupérée afin d'obtenir la première partie de la clé de chiffrement.

Dans un mode de réalisation avantageux dans lequel la donnée est chiffrée au moyen de la clé de chiffrement, la clé de chiffrement comprend une première partie obtenue, dans la plateforme de services, par application d'une fonction d'extraction à la donnée d'utilisation récupérée, cette première partie étant obtenue, dans le terminal numérique, par application de ladite fonction d'extraction à la donnée d'utilisation mémorisée dans le terminal numérique, ce qui permet de limiter le risque de découverte de la clé de chiffrement, aussi bien dans la plateforme de services que dans le terminal numérique.

La présente invention propose par ailleurs un terminal numérique comprenant des moyens de mémorisation aptes à mémoriser au moins une donnée d'utilisation et des moyens de traitement arrangés pour obtenir au moins une première partie d'une clé de chiffrement à partir de la donnée d'utilisation et mettre en oeuvre les étapes d'un procédé de chiffrement d'une donnée tel que décrit ci-avant.

La présente invention propose en outre une plateforme de services comprenant un serveur de services interactifs apte à être connecté à un terminal numérique et un serveur de clés dans lequel sont mémorisés au moins une donnée d'utilisation et un identifiant de clé associés ensemble, ladite plateforme de services étant apte à mettre en oeuvre les étapes d'un procédé de déchiffrement d'une donnée chiffrée tel que décrit ci-avant lorsque cette donnée chiffrée est reçue du terminal numérique.

Le procédé de transmission sécurisée mettant en oeuvre les procédés de chiffrement et de déchiffrement ainsi que le système de transmission sécurisée l'employant, objets de l'invention, seront mieux compris à la lecture de la description et à l'observation des dessins ci-après dans lesquels :
- la figure 1 est un schéma synoptique illustrant un système de transmission sécurisée selon la présente invention; et
- la figure 2 illustre les étapes d'un procédé de transmission sécurisée mettant en oeuvre un procédé de chiffrement et un procédé de déchiffrement selon la présente invention.

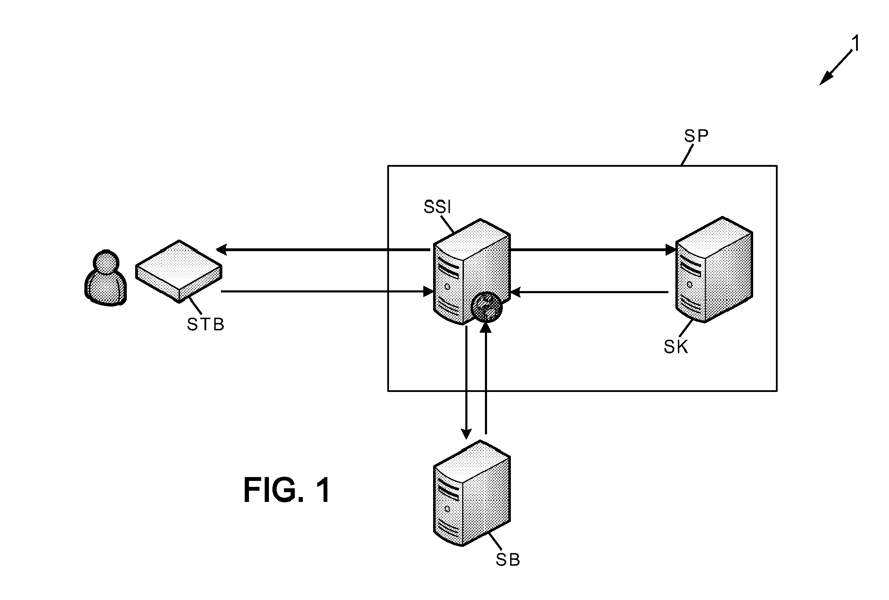

On se réfère tout d'abord à la **figure 1** qui consiste en un schéma synoptique illustrant un système 1 de transmission sécurisée selon la présente invention.

Ce système de transmission sécurisée comprend une plateforme de services interactifs SP connecté à au moins un terminal numérique STB, localisé chez un utilisateur des services interactifs fournis par l'opérateur de cette plateforme.

Un seul terminal numérique STB est représenté sur la figure 1, à titre purement illustratif, mais il est évident qu'un nombre quelconque de terminaux STB peuvent être connectés à la plateforme de services interactifs SP. Dans le cas de la télévision numérique, un tel terminal numérique STB est aussi un décodeur numérique ou set-top-box.

On entend ici par le terme « plateforme » une architecture matérielle informatique permettant l'écriture, la lecture, l'utilisation ou le développement d'un logiciel pouvant être un système d'exploitation.

La plateforme de services interactifs SP comprend donc un serveur de services interactifs SSI, connecté au terminal numérique STB afin de pouvoir interagir avec l'utilisateur pour lui fournir au moins un service interactif. Cette connexion peut être implémentée physiquement au moyen du réseau téléphonique commuté ou d'un réseau à fibre optique, et peut utiliser le réseau internet et les protocoles associés (type IP) à ce type de réseau pour l'échange de données.

Dans le cadre d'un paiement par carte bancaire, le serveur SSI de la plateforme de services interactifs SP peut être connecté à un serveur de paiement SB afin de lui déléguer le contrôle des paiements associés à des transactions interactives, pour des raisons de sécurités.

La plateforme de services interactifs SP peut comprendre par ailleurs un serveur de clés SK, connecté au serveur SSI. La fonction de ce serveur de clés SK est de fournir au serveur SSI, sur requête de celui-ci, un ou plusieurs élément(s) de chiffrement permettant au serveur SSI de sécuriser la transaction avec un utilisateur. Un seul élément de chiffrement est fourni à la fois, pour garantir l'unicité des transactions. Le serveur de clés SK et le serveur SSI peuvent comprendre à ce titre des moyens de mémorisation pour mémoriser un certain nombre d'éléments de chiffrement.

Avec ce mode de réalisation dans lequel les fonctions de mémorisation des éléments de chiffrement (dans le serveur SK) et d'interface avec le réseau de connexion au terminal numérique (dans le serveur SSI) sont séparées au sein de la plateforme de services interactifs SP, on empêche la découverte des éléments de chiffrement par un éventuel utilisateur malveillant ayant accès au serveur de services interactifs SSI par le biais du réseau de connexion qui peut être ouvert (comme par exemple le réseau internet) ou peu sécurisé comme certains réseaux privés.

La connexion entre le serveur SSI et le serveur de clés SK au sein de la plateforme de services interactifs SP, ainsi que la connexion entre le serveur SSI et le serveur de paiement SB, appartiennent au fournisseur de services et sont donc considérées comme étant sécurisées.

Par contre, la connexion entre le serveur SSI et le terminal numérique STB n'appartient pas forcément au fournisseur de services mais peut être partagée, au moins en partie, avec d'autres opérateurs et/ou fournisseurs de services. C'est en particulier le cas lorsque les données échangées entre la plateforme de services et le terminal numérique transitent par le réseau internet. De plus, même quand cette connexion appartient à un réseau privé, elle n'est pas forcément protégée suffisamment contre l'intervention d'un utilisateur malveillant. Cette connexion constitue donc le maillon faible en termes de sécurité de transmission de données et le procédé de transmission sécurisée de données décrit ci-après permet de sécuriser en particulier la transmission de données sur ce type de connexion.

De son côté, le terminal numérique comprenant des moyens de mémorisation (non représentés) aptes à mémoriser au moins une donnée d'utilisation tel que définie ci-après et des moyens de traitement (non représentés) aptes à traiter cette donnée d'utilisation pour en obtenir au moins une première partie, voire l'intégralité, d'une clé de chiffrement à partir de la donnée d'utilisation, selon le procédé qui est décrit ci-après.

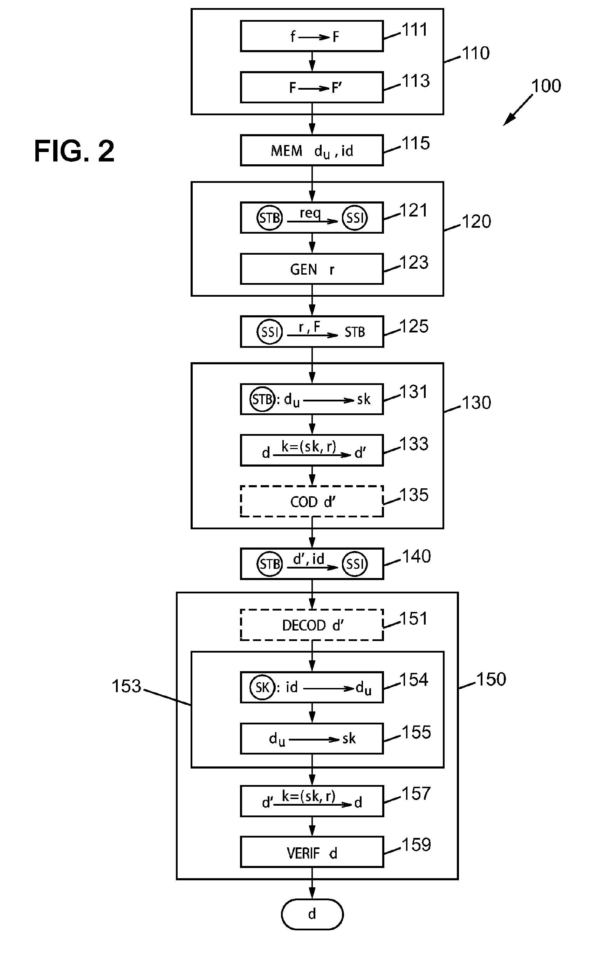

On se réfère maintenant à la **figure 2** sur laquelle sont illustrées les étapes d'un procédé de transmission sécurisée 100 d'une donnée d, d'un terminal numérique STB vers une plateforme de services SP, selon la présente invention.

La transmission sécurisée en question ne se limite pas bien sûr à la transmission d'une seule donnée, mais peut concerner un nombre quelconque de données, ou une donnée composée d'un nombre quelconque de caractères ou de symboles.

Le procédé de transmission sécurisée comprend une première étape 110 de préparation de la fonction de chiffrement à utiliser.

Au cours de cette étape 110 de préparation, la fonction de chiffrement f est écrite au préalable, lors d'une étape d'écriture 111, dans un code source F au moyen d'un langage de programmation interprétable par le terminal numérique. Cette fonction de chiffrement f correspond à une fonction de déchiffrement f* qui, elle, est mémorisée dans le serveur de services interactifs SSI et qui servira au déchiffrement des données chiffrées provenant du terminal numérique.

Une telle étape d'écriture 111 peut être effectuée au cours d'une phase de développement d'un service interactif, par exemple, dans le serveur de services interactifs SSI de la plateforme SP qui est connecté au terminal numérique STB, ce qui permet l'installation ultérieure de cette fonction de chiffrement f et son exécution sur ce terminal numérique lors de la mise en place proprement dite du service.

Il est ici particulièrement avantageux d'utiliser le langage Javascript comme langage de programmation, le langage Javascript étant un langage de programmation orienté objets de scripts répandu, couramment utilisé dans les pages web interactives. En écrivant la fonction f dans ce langage Javascript, on s'assure ainsi de la possibilité d'installer la fonctionnalité de chiffrement dans la plupart des décodeurs numériques actuels.

Dans un mode de réalisation avantageux, une fois la fonction de chiffrement f programmée dans un code source F lors de l'étape d'écriture 111, une étape 113 d'obfuscation de ce code source F peut être effectuée dans le serveur de services interactifs SSI, afin de rendre ce code source F incompréhensible pour un éventuel intervenant malveillant, en le transformant en un code source obfusqué F' pouvant être interprété par le terminal numérique STB. Une telle étape d'obfuscation est avantageusement réalisée après la phase de développement du service interactif et avant sa mise en ligne.

Cette étape d'obfuscation 113 peut consister, entre autres à :
- renommer les identifiants du code utilisés dans ce code source, tels que les variables, les constantes, les classes, les méthodes, ou les attributs (« refactoring » en anglais) ;
- supprimer les commentaires présents dans le code source, lesquels sont souvent indispensable pour la compréhension du code source ;
- élaguer les conventions de codage utilisées dans le code source. Une convention de codage est un ensemble de règles strictes auxquelles doivent se plier les développeurs d'une application afin de s'assurer de l'uniformité du code source, pour permettre de garantir une lisibilité assurée et une maintenance efficace. Une telle convention peut décrire la manière d'indenter le code, d'écrire les délimiteurs de blocs de code ou de nommer les variables, par exemple.
- supprimer les API non utilisées. En effet, les noms des bibliothèques importées (Java, PHP) ou incluses (C, C++) au code source sont susceptibles de fournir des indications sur les algorithmes employés dans ce code source. Cacher les bibliothèques qui ne sont pas utilisées permet de réduire le nombre d'indices à disposition d'un éventuel utilisateur malveillant.

A ce stade, une fois la fonction de chiffrement f préparée dans la plateforme de services, deux modes de réalisation sont possibles pour installer cette fonction de chiffrement dans le terminal numérique.

Dans un premier mode de réalisation, l'étape de préparation 110 se conclut par le téléchargement de la fonction de chiffrement f, sous sa forme code source F, ou de façon avantageuse sous la forme obfusquée F', dans le terminal numérique STB, à partir du serveur de services interactifs SSI.

Dans ce premier mode de réalisation où la fonction de chiffrement n'est téléchargée qu'une fois pour toutes les utilisations ultérieures, le code source F peut ensuite être exécuté dans ce terminal numérique STB pour y installer de façon permanente la fonctionnalité de chiffrement associée à la fonction de chiffrement f. Un tel téléchargement peut être effectué sous la forme de la transmission d'un plug-in au terminal numérique STB, par exemple.

Dans un deuxième mode de réalisation, la fonction de chiffrement f est téléchargée sous sa forme code source F (ou de façon avantageuse sous la forme obfusquée F' de code source) lors de chaque requête en transmission sécurisée, comme cela sera décrit plus loin, ce qui permet d'éviter un stockage permanent de cette fonction dans le terminal numérique et donc restreint les possibilités de découverte frauduleuse de cette fonction de chiffrement.

Le fait de télécharger la fonction de chiffrement f dans le terminal numérique après l'avoir écrite dans un langage de programmation interprétable par ce terminal d'installer la fonctionnalité de chiffrement sur un terminal numérique STP qui n'en dispose pas de fonctionnalité de chiffrement compatible avec la plateforme de services SP afin de chiffrer une donnée d à transmettre de façon sécurisée vers la plateforme de services SP à laquelle il est connecté, lors d'une transaction sécurisée.

La fonction de chiffrement f est avantageusement une fonction de chiffrement à clé symétrique, ce qui permet un traitement des données plus rapide au niveau du terminal numérique STB qu'un procédé de chiffrement par clé asymétrique classique, par exemple de type RSA, en particulier si la fonction de chiffrement est écrite en Javascript.

Une telle fonction f de chiffrement à clé symétrique utilise une clé de chiffrement k dans le terminal numérique STB pour masquer la donnée d à transmettre, par exemple en effectuant une opération mathématique combinant la clé de chiffrement k et la donnée d à chiffrer. La fonction de déchiffrement f* correspondante utilise ensuite également cette même clé de chiffrement k, dans la plateforme de services interactifs SP, pour retrouver la donnée d, en effectuant une autre opération mathématique sur la donnée chiffrée d' reçue.

Dans un mode de réalisation particulier, la fonction f de chiffrement symétrique utilisée est une fonction de chiffrement par blocs. Le chiffrement symétrique par blocs présente l'avantage de fournir une solution de chiffrement complète et de qualité, tout en permettant le transport d'un grand nombre de données.

En particulier, une fonction de chiffrement par blocs de type « DES » (pour Data Encryption Standard en anglais), utilisant au moins une clé de chiffrement, peut être utilisée. Ce type de chiffrement présente l'avantage d'être extrêmement rapide, ce qui est particulièrement au traitement d'une transaction sécurisée en temps réel. La variante « Triple DES », utilisant deux ou trois clés de chiffrement différentes, peut également être utilisée pour renforcer la sécurité du chiffrement.

Outre cette étape 110 de préparation de la fonction de chiffrement, une étape d'initialisation 115 a également lieu lorsque l'utilisateur utilisant le terminal numérique STB souscrit à un service interactif fourni par la plateforme de services SP.

Au cours de cette étape d'initialisation 115, une donnée d'utilisation dᵤ est mémorisée dans la plateforme de services SP.

Dans le contexte de la présente invention, l'expression "donnée d'utilisation" peut se référer aussi bien à une donnée utilisable pour la génération de clef de chiffrement qu'une donnée utilisable dans un but différent: par exemple, une donnée utilisable pour l'identification et/ou l'authentification :
- d'un utilisateur du terminal numérique,
- d'un compte utilisateur associé au terminal numérique,
- du terminal numérique lui-même ou encore
- d'une entité matérielle (carte à puce, passerelle domestique, etc) associée au terminal numérique.

Dans un mode particulier de réalisation, une telle donnée d'utilisation dᵤ peut être une chaîne de caractère désignant un compte utilisateur appartenant à l'utilisateur du terminal numérique ou toute autre donnée susceptible d'être transformée en une chaîne de caractère de longueur minimale prédéfinie. Une longueur minimale de cette chaîne de caractère est, de manière connue, en effet requise pour obtenir un niveau de sécurité minimal lorsque cette chaîne de caractère est utilisée comme clé de chiffrement.

Cette même donnée d'utilisation dᵤ est également mémorisée dans le terminal numérique SP (par exemple dans son système de fichiers) au cours de cette étape d'initialisation 115, de sorte que cette donnée d'utilisation dᵤ est présente aussi bien du côté de la plateforme de services SP que du terminal numérique STB, et ce sans qu'il soit nécessaire de transmettre cette donnée d'utilisation dᵤ de la plateforme de services SP vers le terminal numérique STB ou vice-versa.

Cet identifiant id est lui-même obtenu à partir de données d'utilisation mises en mémoire lors de l'étape d'initialisation 115 dans le terminal numérique STB. Cet identifiant id est un identifiant connu de la plateforme de services SP et mémorisé par cette plateforme de service SP en association avec la donnée d'utilisation du. Avantageusement, dans la plateforme de services SP, la donnée d'utilisation dᵤ est mémorisé dans le serveur de clés SK en association avec un identifiant de clé id permettant de récupérer ultérieurement cette donnée d'utilisation dᵤ. Un tel identifiant de clé id peut être une donnée identifiant de manière univoque le terminal numérique STB par exemple.

Cet identifiant de clé peut être constitué par toute donnée, connue de la plateforme de services SP et du terminal numérique STB, pour laquelle existe et est mémorisée dans la plateforme de services SP une association univoque avec la donnée d'utilisation dᵤ choisie pour la génération de la clé de chiffrement.

Cet identifiant id ne servant pas pour le chiffrement, le nombre de caractère ou de chiffres qui le compose n'a pas d'importance, la seule contrainte étant qu'il soit possible de restituer la donnée d'utilisation dᵤ à partir de cet identifiant.

Une fois ces étapes de préparation et d'installation effectuées, la préparation du terminal numérique est terminée et le terminal numérique STB peut chiffrer, lors d'une étape de chiffrement 130, une donnée d avant de transmettre la donnée chiffrée, lors d'une étape de transmission 140, vers le serveur de services interactifs SSI où la donnée d sera restituée au cours d'une étape de déchiffrement 150.

Dans la présente invention, pour effectuer le chiffrement, la fonction de chiffrement f utilise une clé de chiffrement k qui n'est pas mémorisée telle quelle dans le terminal numérique, afin d'éviter que la clé de chiffrement ne puisse être découverte par un utilisateur malveillant ayant accès au terminal numérique, cette clé de chiffrement pouvant cependant être déduite (étape 131) de la donnée d'utilisation dᵤ préalablement stockée dans le terminal numérique. La clé de chiffrement ainsi obtenue est utilisée pour chiffrer ensuite la donnée d en une donnée chiffrée d' (étape 133).

Ainsi, avant d'effectuer le chiffrement proprement dit (étape 133), la clé de chiffrement k est obtenue au moins partiellement à partir de la donnée d'utilisation dᵤ mémorisée dans le terminal numérique, lors de l'étape d'initialisation 115. L'obtention au moins partielle de la clé de chiffrement k peut être effectuée par application d'une fonction d'extraction à la donnée d'utilisation, lors d'une étape d'extraction 131.

Ainsi, si la donnée d'utilisation mémorisée dans le terminal numérique STB consiste en une chaîne de caractères de longueur quelconque ou fixe désignant le compte de l'utilisateur du terminal numérique, la fonction d'extraction peut consister à extraire les 20 premiers octets de cette chaîne de caractère. D'autres fonctions d'extraction simples, consistant à extraire une certaine partie de la donnée d'utilisation, peuvent être employées aussi bien que des fonctions d'extraction plus complexes dans lesquelles une certaine partie de la donnée d'utilisation est d'abord extraite avant d'être transformée (par permutation de caractères, par exemple).

Dans un premier mode particulier de réalisation, la clé de chiffrement k est intégralement obtenue à partir de l'extraction d'une partie de cette donnée d'utilisation. Ainsi, pour reprendre l'exemple ci-dessus, la clé de chiffrement k peut consister simplement dans les 20 premiers octets de la chaîne de caractères désignant le compte de l'utilisateur du terminal numérique.

Dans un autre mode de réalisation, la clé de chiffrement k comprend une première partie sk qui est obtenue par application d'une fonction d'extraction à la donnée d'utilisation dᵤ et au moins une deuxième partie qui, elle, n'est pas obtenue à partir de la donnée d'utilisation dᵤ. Dans ce cas, la donnée d'utilisation dᵤ ne sert pas à déduire l'intégralité de la clé de chiffrement, ce qui permet d'éviter qu'un utilisateur malveillant ayant la pleine connaissance de la donnée d'utilisation dᵤ et de la fonction d'extraction utilisée dans le terminal numérique puisse retrouver directement la clé de chiffrement k, et donc déchiffrer la donnée chiffrée d'.

Dans une variante avantageuse de ce dernier mode de réalisation, afin de renforcer la sécurisation du procédé, la deuxième partie de la clé de chiffrement (qui n'est pas obtenue à partir de la donnée d'utilisation dᵤ) est une donnée aléatoire r. Cette deuxième partie aléatoire r peut être générée dans la plateforme de services SP, au cours d'une étape 120 de génération de la deuxième partie de la clé de chiffrement, et transmise au terminal numérique au cours d'une étape de transmission 125.

En particulier, l'étape 120 de génération de la deuxième partie aléatoire r de la clé de chiffrement k est avantageusement initiée par l'envoi d'une requête en transaction sécurisée (étape 121) du terminal numérique STB vers le serveur de services interactifs SSI. L'envoi d'une telle requête peut être initié par l'utilisateur lorsque celui-ci indique, via son navigateur web, qu'il désire effectuer une transaction sécurisée.

Par exemple, lorsque l'utilisateur regarde un programme télévisé interactif dans lequel est offerte la possibilité d'acheter en direct un des produits diffusés à l'écran, l'utilisateur peut requérir l'achat au moyen de sa télécommande de terminal numérique, par exemple en sélectionnant une option affichée sur l'écran. Une telle requête d'achat de l'utilisateur déclenche l'envoi d'une requête en transaction sécurisée vers le serveur de services interactifs SSI.

Dans ce mode de réalisation, ce n'est qu'une fois que la requête en transaction sécurisée est reçue par le serveur de services interactifs SSI lors de l'étape 121 que la deuxième partie r de la clé de chiffrement k est ensuite générée, lors d'une étape de génération aléatoire 123, dans le serveur de services interactifs SSI, ce qui diminue les chances qu'un éventuel utilisateur malveillant puisse retrouver la clé de chiffrement.

Une fois générée aléatoirement, cette deuxième partie r est alors transmise lors d'une étape de transmission 125 au terminal numérique STB afin d'y reconstituer la clé de chiffrement k pour effectuer le chiffrement de la donnée d.

Comme déjà vu précédemment, si la fonction de chiffrement n'a pas déjà été émise lors d'une étape préalable de préparation 110, cette fonction de chiffrement peut également être transmise avec la deuxième partie r de la clé de chiffrement lors de cette étape 125 de transmission, sous sa forme de code source F ou de code source obfusqué F'. Ceci peut prendre la forme de l'envoi d'un formulaire à remplir par l'utilisateur après que celui-ci ait sollicité une transaction sécurisée.

Une fois la première partie sk de la clé de chiffrement k récupérée à partir de la donnée d'utilisation du et la deuxième partie aléatoire r de la clé de chiffrement k reçue de la plateforme de services, il devient alors possible de retrouver la clé de chiffrement k permettant le chiffrement proprement dit de la donnée d avec la fonction f de chiffrement.

Dans un mode de réalisation particulier, cette clé de chiffrement k comprend la concaténation de la première partie sk extraite de la donnée d'utilisation mémorisée dans le terminal numérique avec la deuxième partie aléatoire r reçue de la plateforme de services.

Ainsi, par exemple, lorsque la fonction f de chiffrement est une fonction de chiffrement symétrique par blocs de type « DES », avec un bloc de données à coder de 32 bits et une clé de chiffrement de 32 bits, la clé de chiffrement peut consister en la concaténation d'une première partie sk de 16 bits, extraite de la donnée d'utilisation dᵤ, et d'une donnée aléatoire r de 16 bits. Le chiffrement de la donnée d est alors effectué, dans le terminal numérique STB, au moyen de cette clé de chiffrement et le déchiffrement de la donnée chiffrée d' est également effectué, dans le serveur de services interactifs SSI, au moyen de cette même clé de chiffrement. Ces longueurs de clé et de données sont données à titre d'exemple et la longueur de la donnée aléatoire r faisant office de deuxième partie de clé de chiffrement peut être choisie ici pour compléter la première partie sk par concaténation, afin d'obtenir une clé de chiffrement de longueur compatible avec la méthode de chiffrement employée (algorithme « DES » ou un autre algorithme).

Dans un autre mode de réalisation avantageux, il est également possible de générer une fonction de chiffrement f spécifiquement pour une transaction sécurisée donnée, suite à la réception de la requête en transaction sécurisée par le serveur de services interactifs SSI, par exemple en choisissant aléatoirement une fonction de chiffrement fᵢ parmi un ensemble de fonctions de chiffrement prédéfini {fᵢ}_{1≤i≤N}. Ainsi, à chaque fois qu'un utilisateur utilisant le terminal numérique STB essaie d'effectuer une transaction sécurisée, une fonction fᵢ de chiffrement aléatoire et différente de la précédente fonction fᵢ₋₁ choisie est téléchargée par le terminal numérique STB, ce qui empêche un utilisateur malveillant ayant acquis la connaissance d'une fonction de chiffrement employée pour une transaction de donnée de l'utiliser pour une transaction ultérieure.

Avantageusement, l'étape 130 de chiffrement de la donnée d peut comporter en outre une sous-étape 135 de codage de la donnée chiffrée d', avant que celle-ci ne soit transmise à la plateforme de services. Pour ce faire, la donnée chiffrée d' obtenue lors de la sous-étape 133 de chiffrement de la donnée d, est codée au moyen d'un codage adapté au type de transmission de données employé.

On peut tenir compte ici aussi bien du protocole de transmission utilisé que du langage de programmation employé. Ainsi, le codage utilisé doit, d'une part, préserver la signification des caractères utilisés par le protocole de transmission (afin d'éviter que de créer des erreurs d'interprétation sur ceux-ci) et, d'autre part, préserver les symboles utilisés par le langage de programmation.

Ainsi, un codage de type Base64 peut être utilisé pour coder la donnée chiffrée d' et la transformer en une donnée codée d". Le codage de type Base64 est avantageux en ce qu'il permet une grande interopérabilité entre différents types de plateformes et de terminaux numériques. En particulier, le codage de type Base64 permet à un terminal numérique utilisant une certaine langue de communiquer avec une plateforme de services SP utilisant une autre langue.

A l'issue de l'étape 130 de chiffrement de la donnée d, la donnée chiffrée d' est alors transmise par le terminal numérique STB, avantageusement sous une forme codée, vers le serveur de services interactifs SSI, lors d'une étape 140 de transmission de donnée chiffrée.

Une fois la donnée chiffrée d' reçue par le serveur de services interactifs SSI, celui-ci peut procéder à la récupération de la donnée d, lors d'une étape 150 de déchiffrement de cette donnée chiffrée d'.

Pour ce faire, si la donnée chiffrée d' a été codée avant sa transmission, l'étape 150 peut comporter une étape préliminaire 151 de décodage afin de retranscrire la donnée chiffrée d' dans un langage compréhensible par le serveur SSI de la plateforme de services SP.

L'étape 150 de déchiffrement comprend ensuite une sous-étape 153 de récupération de la donnée d'utilisation dᵤ mémorisée dans le serveur de clés SK de la plateforme de services SP suivie d'une sous-étape 155 d'obtention au moins partielle de la clé de chiffrement k à partir de cette donnée d'utilisation dᵤ récupérée.

Plus particulièrement, la sous-étape 153 de récupération consiste à récupérer la donnée d'utilisation dᵤ au moyen d'un identifiant de clé id reçu du terminal numérique. Cet identifiant de clé id peut être transmis, par exemple, avec la donnée chiffrée d' lors de l'étape de transmission 140. Une fois cet identifiant de clé id reçu par le serveur de services interactifs SSI, il sert à retrouver la donnée d'utilisation du qui lui est associée dans le serveur de clés SK (sous-étape 154).

La clé de chiffrement k est ensuite obtenue (sous-étape 155), au moins partiellement, à partir de cette donnée d'utilisation dᵤ récupérée, similairement à la procédure évoquée ci-avant au niveau du terminal numérique STB, toujours afin d'éviter un stockage permanent de clé de chiffrement. La méthode de chiffrement étant symétrique, la clé utilisée pour le déchiffrement est en effet identique à la clé utilisée pour le chiffrement.

Dans un premier mode de réalisation particulier, la clé de chiffrement k peut être intégralement obtenue à partir de l'extraction d'une partie de cette donnée d'utilisation dᵤ. Ainsi, pour reprendre l'exemple indiqué précédemment, la clé de chiffrement k peut consister simplement dans les 20 premiers octets d'une chaîne de caractères désignant le compte de l'utilisateur du terminal numérique, mémorisée dans le serveur de clés SK.

Cependant, dans un autre mode de réalisation avantageux, la clé de chiffrement k comprend une première partie sk qui est obtenue par application d'une fonction d'extraction à la donnée d'utilisation dᵤ et au moins une deuxième partie qui, elle, n'est pas obtenue à partir de la donnée d'utilisation dᵤ, ce qui permet d'éviter qu'un utilisateur malveillant ayant la pleine connaissance de la donnée d'utilisation dᵤ et de la fonction d'extraction utilisée dans le terminal numérique puisse retrouver directement la clé de chiffrement k, et donc déchiffrer la donnée chiffrée d'.

Dans cette variante avantageuse, la sous-étape 155 aboutit à l'obtention de la première partie sk de la clé de chiffrement tandis que la deuxième partie de la clé de chiffrement (qui n'est pas obtenue à partir de la donnée d'utilisation dᵤ) est la donnée aléatoire r générée lors de l'étape 123 de génération aléatoire.

Cette donnée aléatoire r est avantageusement mémorisée, lors de sa génération aléatoire, dans le serveur de services interactifs SSI (alors que la première partie sk de la clé de chiffrement k n'y est pas mémorisée) avant d'être transmise au terminal numérique pour y recomposer la clé de chiffrement k lors de l'étape de transmission 125, pour pouvoir être réutilisée au cours du déchiffrement.

Une fois la première partie sk de la clé de chiffrement k obtenue à partir de la donnée d'utilisation dᵤ récupérée dans le serveur de clés SK, et avec la deuxième partie aléatoire r de la clé de chiffrement k telle que mémorisé dans le serveur de services interactifs SSI, le déchiffrement proprement dit de la donnée chiffrée d' peut alors avoir lieu au cours d'une étape 157. La donnée d est alors retrouvée et la transmission sécurisée de cette donnée d complétée.

Il est possible de terminer l'étape 150 de récupération de la donnée d par une sous-étape 159 de vérification de cette donnée selon certains critères précis. Ainsi, si la donnée d chiffrée et transmise selon ce qui a été décrit ci-dessus est un numéro de carte bancaire à 16 chiffres, la donnée d obtenue à l'issue du déchiffrement doit forcément consister en un numéro à 16 chiffres. Si tel n'est pas le cas, la transaction est interrompue car la donnée d obtenue est corrompue et un processus de récupération et/ou d'alerte peut alors être lancé.

La donnée de transaction d récupérée dans le serveur de services interactifs SSI, quand elle concerne le paiement d'une transaction, peut être ensuite transmise à un serveur de paiement SB connecté au serveur de services interactifs SSI afin de procéder au paiement associé à la transaction initiée par l'utilisateur.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention.

En particulier, la présente invention trouve une application particulièrement avantageuse dans le domaine de la télévision interactive, dans la mesure où la plupart des terminaux numériques actuels ne sont pas équipés d'une fonction de chiffrement. Cependant, le procédé de transmission sécurisée ci-avant peut s'appliquer à tout type d'application nécessitant la transmission de données sur un réseau non-sécurisé au moyen d'un terminal numérique ne présentant pas de fonctionnalité de chiffrement.

De plus, la présente invention s'applique particulièrement à la transmission sécurisée de données de cartes bancaires utilisées lors d'une transaction interactive entre un terminal numérique et une plateforme de services interactives. Cependant, d'autres types de données personnelles, de nature confidentielle ou nécessitant une sécurisation quelconque, peuvent être transmises au moyen d'un tel procédé de transmission sécurisée.

## Revendications

1. Procédé de chiffrement d'une donnée dans lequel la donnée est chiffrée (130) dans un terminal numérique (STB) au moyen d'une clé de chiffrement (k) avant d'être transmise (140) à une plateforme de services (SP), **caractérisé en ce que** la clé de chiffrement est obtenue (131) au moins partiellement à partir d'une donnée d'utilisation (dᵤ) mémorisée dans le terminal numérique (STB).

2. Procédé de chiffrement selon la revendication 1, **caractérisé en ce que** la clé de chiffrement comprend une première partie (sk) obtenue par application d'une fonction d'extraction à la donnée d'utilisation.

3. Procédé de chiffrement selon la revendication 2, **caractérisé en ce que** la clé de chiffrement comprend en outre une deuxième partie aléatoire (r) reçue (125) de la plateforme de services (SP) suite à l'envoi (121) par le terminal numérique d'une requête en transaction sécurisée.

4. Procédé de chiffrement selon la revendication 3, **caractérisé en ce que** la clé de chiffrement (k) comprend la concaténation de la première partie (sk) extraite de la donnée d'utilisation mémorisée dans le terminal numérique avec la deuxième partie aléatoire (r) reçue de la plateforme de services.

5. Procédé de chiffrement selon l'une des revendications 1 à 4, **caractérisé en ce que** la donnée chiffrée est transmise à la plateforme de services (SP) avec un identifiant de clé (id) obtenu au moins partiellement à partir d'une autre donnée d'utilisation mémorisée dans le terminal numérique (STB).

6. Procédé de déchiffrement d'une donnée chiffrée (d') reçue d'un terminal numérique (STB) dans lequel la donnée chiffrée est déchiffrée (150) dans une plateforme de services (SP) au moyen d'une clé de chiffrement (k), **caractérisé en ce que** la clé de chiffrement est obtenue (155) au moins partiellement à partir d'une donnée d'utilisation (dᵤ) récupérée (154) dans la plateforme de services au moyen d'un identifiant de clé (id) reçu (140) du terminal numérique.

7. Procédé de déchiffrement selon la revendication 6, **caractérisé en ce que** la clé de chiffrement comprend une première partie (sk) obtenue par application d'une fonction d'extraction à la donnée d'utilisation.

8. Procédé de déchiffrement selon la revendication 7, dans lequel la clé de chiffrement (k) comprend en outre une deuxième partie aléatoire (r), **caractérisé en ce que** la deuxième partie aléatoire est générée (123) aléatoirement dans la plateforme de services, suite à la réception (121) d'une requête en transaction sécurisée, avant d'être transmise (125) au terminal numérique.

9. Procédé de déchiffrement selon la revendication 8, **caractérisé en ce que** la clé de chiffrement comprend la concaténation de la première partie (sk) extraite de la donnée d'utilisation récupérée au moyen de l'identifiant de clé avec la deuxième partie aléatoire (r).

10. Procédé de déchiffrement selon l'une des revendications 8 ou 9, dans lequel la plateforme de services (SP) comprend un serveur de clés (SK) et un serveur de services interactifs (SSI) connecté au terminal numérique, **caractérisé en ce que** la deuxième partie aléatoire est générée dans le serveur de services interactifs et la donnée d'utilisation est mémorisée (115) en association avec l'identifiant de clé dans le serveur de clés.

11. Procédé de déchiffrement selon la revendication 10, **caractérisé en ce que** l'étape d'obtention (153) comprend la récupération (154), dans le serveur de clés, de la donnée d'utilisation (dᵤ) associée à l'identifiant de clé (id) reçu du terminal numérique, suivie de l'application (155) de la fonction d'extraction à la donnée d'utilisation récupérée afin d'obtenir la première partie de la clé de chiffrement.

12. Terminal numérique (STB) comprenant des moyens de mémorisation aptes à mémoriser au moins une donnée d'utilisation et des moyens de traitement arrangés pour obtenir au moins une première partie d'une clé de chiffrement à partir de la donnée d'utilisation et mettre en oeuvre les étapes d'un procédé de chiffrement d'une donnée selon l'une des revendications 1 à 5.

13. Plateforme de services (SP) comprenant un serveur de services interactifs (SSI) apte à être connecté à un terminal numérique et un serveur de clés (SK) dans lequel sont mémorisés au moins une donnée d'utilisation et un identifiant de clé associés ensemble, ladite plateforme de services étant apte à mettre en oeuvre les étapes d'un procédé de déchiffrement d'une donnée chiffrée (d) reçue du terminal numérique (STB) selon l'une des revendications 6 à 11.
